# EUROPÄISCHE PATENTSCHRIFT

(11) **EP 1 313 959 B1**
(45) Veröffentlichungstag und Bekanntmachung des Hinweises auf die Patenterteilung: **26.10.2005**
(21) Anmeldenummer: 01962663.9
(22) Anmeldetag: 20.08.2001
(51) Int. Cl.: F16C 39/06

(54) **MAGNETLAGER ZUR LAGERUNG EINER DREHBAREN WELLE UNTER VERWENDUNG VON HOCH-TC-SUPRALEITERMATERIAL**
MAGNETIC BEARING FOR SUSPENDING A ROTATING SHAFT USING HIGH TC SUPERCONDUCTING MATERIAL
PALIER MAGNETIQUE DESTINE A SOUTENIR UN ARBRE ROTATIF AU MOYEN D'UN MATERIAU SUPRACONDUCTEUR A TC ELEVEE

(30) Priorität: 31.08.2000 DE 10042962
(43) Veröffentlichungstag der Anmeldung: 28.05.2003
(73) Patentinhaber: SIEMENS AKTIENGESELLSCHAFT, 80333 München (DE)
(72) Erfinder: STEINMEYER, Florian, Leafield, Oxfordshire OX8 5NP (GB)
(86) Internationale Anmeldenummer: PCT/DE2001/003173
(87) Internationale Veröffentlichungsnummer: WO 2002/018807

(56) Entgegenhaltungen:
- DE-C- 19 643 844
- US-A- 5 196 748
- US-A- 5 220 232
- US-A- 5 633 548

## Beschreibung

Magnetlager zur Lagerung einer drehbaren Welle unter Verwendung von Hoch-T_{c}-Supraleitermaterial

Die Erfindung bezieht sich auf ein Magnetlager mit magnetischer Lagerung einer drehbaren Welle innerhalb eines Stators. Das Magnetlager soll folgende Merkmale aufweisen:
- Ein erster Lagerteil ist mit der Welle starr verbunden und von einem zweiten, dem Stator zugehörenden Lagerteil umschlossen unter Ausbildung eines Lagerspaltes zwischen diesen Lagerteilen,
- der erste Lagerteil enthält eine Magnetanordnung mit permanentmagnetischen Elementen,
- der zweite Lagerteil enthält eine Supraleitungsanordnung mit Hoch-T_{c}-Supraleitermaterial, wobei zwischen der Supraleitungsanordnung und den permanentmagnetischen Elementen der Magnetanordnung magnetische Lagerungskräfte hervorzurufen sind,
   und
- eine Kühlvorrichtung ist zur Kühlung des Supraleitermaterials der Supraleitungsanordnung auf eine Betriebstemperatur unterhalb der kritischen Temperatur des Supraleitermaterials vorgesehen.
Ein derartiges Magnetlager geht aus der DE 44 36 831 C2 hervor.

Magnetische Lager erlauben eine berührungs- und somit verschleißfreie Lagerung von bewegten Teilen. Sie benötigen keine Schmiermittel und können reibungsarm konstruiert werden. Dabei lässt sich ein drehbarer (rotierender) Körper hermetisch, z.B. vakuumdicht von dem ihn umgebenden Außenraum trennen.

Herkömmliche (konventionelle) Magnetlager benutzen magnetische Kräfte zwischen stationären Elektromagneten eines Stators und mitrotierenden, ferromagnetischen Elementen eines Rotorkörpers. Die Magnetkräfte sind bei diesem Lagertyp immer anziehend. Als Folge davon kann prinzipiell keine inhärent stabile Lagerung in allen drei Raumrichtungen erzielt werden (vgl. "arnshaw' sches Theorem" in "Tans. Cambridge Phil. Soc.", Vol. 7, 1842, Seiten 97 bis 120). Solche Magnetlager benötigen deshalb eine aktive Lagerungsregelung, die über Lagesensoren und einen Regelkreis die Ströme der Tragmagnete steuert und Abweichungen des Rotorkörpers aus einer Solllage entgegenwirkt. Die hierzu mehrkanalig auszuführende Regelung benötigt eine aufwendige Leistungselektronik. Gegen einen plötzlichen Ausfall des Regelkreises muss zusätzlich ein mechanisches Notlager vorgesehen werden. Entsprechende Magnetlager werden z.B. bei Turbomolekularpumpen, Ultrazentrifugen, schnell laufenden Spindeln von Werkzeugmaschinen und Röntgenröhren mit Drehanoden eingesetzt; eine Verwendung bei Motoren, Generatoren, Turbinen und Kompressoren ist ebenfalls bekannt.

Supraleiter erlauben prinzipiell einen neuen Typ von Magnetlagern: Einer der Lagerteile wird hier mit permanentmagnetischen Elementen gebildet, die bei einer Lageänderung als Folge von Feldänderungen in dem Supraleitermaterial eines weiteren, den ersten Lagerteil beabstandet umschließenden zweiten Lagerteils Abschirmströme induzieren. Die hieraus resultierenden Kräfte können abstoßend oder anziehend sein, sind aber so gerichtet, dass sie der Auslenkung aus einer Solllage entgegenwirken. Im Gegensatz zu konventionellen Magnetlagern kann dabei eine inhärent stabile Lagerung erreicht werden (vgl. z.B. "Appl. Phys. Lett.", Vol. 53, No. 16, 1988, Seiten 1554 bis 1556). Im Vergleich zu konventionellen Magnetlagern entfällt hier die aufwendige und störanfällige Regelung; es muss aber eine Kühlvorrichtung zur Kühlung des Supraleitermaterials auf eine Betriebstemperatur unterhalb der kritischen Temperatur des Supraleitermaterials vorgesehen sein.

Entsprechende supraleitende Lagerteile solcher Magnetlager können eines der ersten Einsatzfelder für die seit 1987 bekannten metalloxidischen Hoch-T_{*c*}-Supraleitermaterialien wie z.B. auf Basis des Stoffsystems Y-Ba-Cu-O sein, die mit flüssigem Stickstoff auf eine Betriebstemperatur von etwa 77 K gekühlt werden können.

Bei dem aus der eingangs genannten DE-C2-Schrift zu entnehmende Magnetlager ist eine Verwendung von entsprechendem Hoch-T_{c}-Supraleitermaterial vorgesehen. Das Magnetlager enthält an einer Rotorwelle eine Vielzahl von in Achsrichtung hintereinanderliegenden, ringscheibenförmigen permanentmagnetischen Elementen. Diese Elemente sind so polarisiert, dass sich in axialer Richtung der Welle gesehen eine alternierende Polarisierung ergibt. Zwischen benachbarten Elementen sind jeweils vergleichsweise dünnere ferromagnetische Zwischenelemente angeordnet. Diesen Zwischenelementen kommt in erster Linie die Aufgabe zu, die magnetischen Flusslinien benachbarter permanentmagnetischer Elemente magnetisch zu konzentrieren, so dass an jedem Zwischenelement an seiner dem Lagerspalt zugewandten Seite eine besonders hohe magnetische Feldstärke herrscht. Dieser Lagerteil des Rotorkörpers mit seiner Magnetanordnung aus permanentmagnetischen Elementen ist von einem ortsfesten Lagerteil eines Stators umschlossen. Dieser Lagerteil enthält eine Supraleitungsanordnung mit Hoch-T_{*c*}-Supraleitermaterial wie z.B. YBa₂Cu₃Oₓ, wobei zwischen der Supraleitungsanordnung und den permanentmagnetischen Elementen der Magnetanordnung die vorerwähnten magnetischen Lagerungskräfte hervorzurufen sind. Das Supraleitermaterial der Leiteranordnung wird mit flüssigem Stickstoff (LN₂) auf etwa 77 K gehalten. Hierzu sind an der Außenseite der Supraleitungsanordnung Kühlkanäle vorgesehen, durch welche dieses Kühlmittel geführt wird.

Bei Magnetlagern, in denen tiefzukühlende Teile an den Lagerspalt angrenzen, kann das Problem auftreten, dass durch den Lagerspalt Umgebungsluft an die kalten Bauteile gelangt und dort die Luftfeuchtigkeit ausfriert. Eine entsprechende Vereisung kann zu einer Funktionseinschränkung oder Beschädigung des Lagers führen. Bei dem aus der vorgenannten DE-C2-Schrift entnehmbaren Magnetlager kann eine derartige Vereisung des Lagerspaltes durch Ausleitung von abdampfendem Stickstoff vermieden werden. Die erforderliche Kühlleistung für das Lager beträgt dabei einige Watt bis zu einer Größenordnung von 10 W bei 50 bis 80 K. Sollen jedoch andere Kühltechniken als bei dem bekannten Magnetlager, insbesondere unter Verwendung von sogenannten Kryokühlern mit nur indirekter Kühlung, vorgesehen werden, besteht eine entsprechende Möglichkeit zur Vermeidung der Gefahr von Vereisungen des Lagerspaltes nicht, da dann kein abdampfendes Kühlmittelgas zu Verfügung steht.

Aufgabe der vorliegenden Erfindung ist es deshalb, das Magnetlager mit den eingangs genannten Merkmalen dahingehend auszugestalten, dass unabhängig von der gewählten Kühltechnik eine solche Gefahr der Lagervereisung minimiert wird und der Abdichtungsaufwand gering zu halten ist.

Diese Aufgabe wird erfindungsgemäß dadurch gelöst, dass bei dem Magnetlager mit den eingangs genannten Merkmalen zusätzlich die Supraleitungsanordnung und die Magnetanordnung gemeinsam von mindestens einem Isolationsraum umschlossen sind und dass ein von diesem mindestens einen Isolationsraum getrennter Zusatzraum vorgesehen ist, der den Luftspalt und an den seitlichen Stirnseiten der Supraleitungsanordnung und der Magnetanordnung sich radial bis zu der Welle erstreckende und dort gegenüber der Welle abgedichtete Teilräume umfasst.

Die mit dieser Ausbildung des Magnetlagers verbundenen Vorteile sind insbesondere darin zu sehen, dass der Aufwand zur Abdichtung des Zusatzraums gegenüber den drehbaren Teilen klein gehalten werden kann. Denn die Dichtung nutzt den kleinstmöglichen Durchmesser, wodurch die Umfangsgeschwindigkeit an den mitrotierenden Dichtungsteilen minimiert ist. Hierdurch wird die Funktion der Dichtung erleichtert und die Lebensdauer entsprechend erhöht. Die erleichterte und damit auch effektiv zu gestaltende Abdichtung des Zusatzraums bringt es auch mit sich, dass die Gefahr des Eindringens von ausfrierbaren Gasen zumindest weitgehend ausgeräumt ist.

Vorteilhafte Ausgestaltungen des Magnetlagers gehen aus den abhängigen Ansprüchen hervor.

So lässt sich der Zusatzraum des Magnetlagers in einfacher Weise evakuieren. Dadurch können vorteilhaft Reibungsverluste reduziert werden. Bei einer Leckage der Dichtungsmittel an der Welle könnte zwar theoretisch ein geringer Luftzutritt auftreten; allerdings wird einer starken Vereisung dadurch entgegengewirkt, dass hier eine defekte Dichtung immer noch den Luftaustausch stark behindert, zumal die entsprechenden Strömungsquerschnitte der seitlichen Teilräume gering zu halten sind. Das Magnetlager weist deshalb gute Notlaufeigenschaften auf.

Stattdessen kann besonders vorteilhaft der Zusatzraum mit einem trockenen Schutzgas gefüllt sein. Als trockenes Schutzgas ist jedes Gas oder Gasgemisch geeignet, das keine bei der Betriebstemperatur im Bereich des Lagerspaltes ausfrierende Komponenten aufweist. Entsprechende Schutzgase sind aus der Gruppe He, Ne, Ar, N₂ wählbar, wobei auch ein Gasgemisch mit mindestens einem dieser Gase geeignet ist. Ist der Zusatzraum mit einem Gas gefüllt, so wird die Temperatur von der warmen Welle hin zum kalten Lagerspalt in den vorteilhaft mit geringem Querschnitt auszubildenden seitlichen Teilräumen abgebaut, ohne dass thermische Verluste durch Konvektion entstehen. Eine Konvektion wird nämlich dadurch verhindert, dass das warme Ende der seitlichen Teilräume mit Gas geringerer Dichte achsnäher liegt. Bei Rotation wird dann durch die Zentrifugalkraft eine stabile Schichtung erreicht. Weiterhin ist es als besonders vorteilhaft anzusehen, dass die Funktion auch mit leicht schwankenden Drücken im Gasraum möglich ist, so dass Gasverluste durch Leckagen z.B. im Dichtungsbereich in weiten Grenzen tolerabel sind. Der Gasdruck kann je nach Anforderung an die Anwendungen unter 1 bar, um 1 bar oder darüber liegen, so dass gerade im letzteren Fall ein Zutritt von feuchter Luft mit Eisbildung im Kaltbereich zuverlässig verhindert wird.

Zu einer effektiven thermischen Isolation der zu kühlenden Teile des Magnetlagers kann der mindestens eine Isolationsraum insbesondere evakuiert sein. Stattdessen oder vorzugsweise zusätzlich lässt sich dieser Raum noch mit wenigstens einem an sich bekannten Isolationsmittel zumindest teilweise ausfüllen.

Als besonders vorteilhaft ist es weiterhin anzusehen, dass die Kühlvorrichtung des Magnetlagers mindestens einen Kryokühler mit wenigstens einem Kaltkopf aufweist. Diese Kaltkopf ist dann thermisch an die Supraleitungsanordnung zu deren indirekter Kühlung vorzugsweise über mindestens einen Wärmeleitkörper gekoppelt. Die Verwendung eines solchen Kryokühlers hat den Vorteil, dass die Kälteleistung quasi auf Knopfdruck zur Verfügung steht und die Handhabung von tiefkalten Flüssigkeiten vermieden wird. Für eine effektive Kühlung der bekannten Hoch-T_{c}-Supraleitermaterialien reicht dabei die indirekte Kühlung durch Wärmeleitung zu dem Kaltkopf aus. Bei Einsatz eines Kryokühlers besteht zwar die Möglichkeit der Unterdrückung einer Vereisung des Lagerspaltes durch Ausleitung von abdampfendem Kühlgas wie Stickstoff nicht. Eine thermische Isolierung des Supraleitermaterials im Lagerspalt würde zudem eine deutliche Vergrößerung des Lagerspaltes und damit eine entsprechende drastische Reduzierung der Tragkraft und Steifigkeit des Lagers mit sich bringen. Für eine gute Funktion sollte jedoch der Lagerspalt möglichst klein sein und z.B. in der Größenordnung von 1 mm liegen. Würde man hierzu das Lager komplett in ein isolierendes Vakuumgefäß setzen, dann müsste dieses prinzipiell durch zwei hermetische Dichtungen gegenüber der rotierenden Welle abgedichtet werden. Dies hätte allerdings den Nachteil, dass bei einer Leckage das Vakuum zusammenbricht und die Funktion des Lagers und der gelagerten Maschinenteile entsprechend gestört wird.

Dabei würden dann die permanentmagnetischen Elemente im wesentlichen durch Wärmestrahlung langsam abkühlen auf eine Zwischentemperatur zwischen der Betriebstemperatur des Supraleitermaterials und der Außentemperatur. Durch die erfindungsgemäße Ausbildung des besonderen Zusatzraums, der von dem die Supraleitungsanordnung und die Magnetanordnung gemeinsam umschließenden Isolationsraum getrennt ist, können jedoch vorteilhaft entsprechende Abdichtungsprobleme umgangen werden, da - wie bereits ausgeführt - deutlich geringere Anforderungen an die Abdichtung des Zusatzraums zu stellen sind. Damit ist auch eine indirekte Kühlung ohne Weiters einsetzbar.

Weitere vorteilhafte Ausgestaltungen des Magnetlagers nach der Erfindung gehen aus den restlichen Ansprüchen hervor.

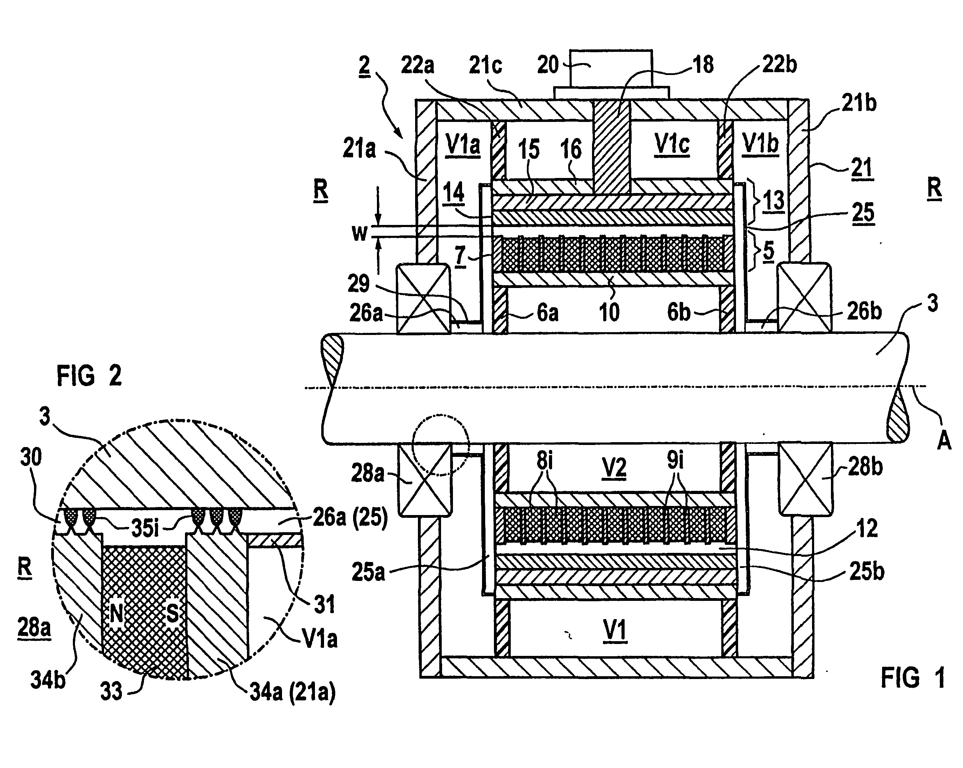

Die Erfindung wird nachfolgend an Hand der Zeichnung noch weiter erläutert, aus deren Figuren in schematischer Darstellung ein Ausführungsbeispiel eines erfindungsgemäßen Magnetlagers in seinen wesentlichen Teilen hervorgeht Dabei zeigen
- deren Figur 1: einen Längsschnitt durch das Magnetlager und
- deren Figur 2: eine Detailansicht einer Dichtungsvorrichtung des Magnetlagers nach Figur 1.
In den Figuren sind sich entsprechende Teile mit denselben Bezugszeichen versehen.

Dem in Figur 1 allgemein mit 2 bezeichneten Magnetlager ist eine Ausführungsform zugrunde gelegt, wie sie der genannten DE 44 36 831 C2 zu entnehmen ist. Das Lager ist zu einer magnetischen Lagerung einer (drehbaren) Rotorwelle 3 vorgesehen, die aus einem nicht-magnetischen Material wie z.B. aus einem entsprechenden Stahl bestehen kann. Z.B. ist die Welle 3 Teil einer in der Figur nicht ausgeführten elektrischen Maschine wie beispielsweise eines Generators. Ihr ist ein erster, mitrotierender Lagerteil 5 zugeordnet, der sie im Lagerbereich konzentrisch umgibt. Dieser Lagerteil ist über scheibenförmige Tragelemente 6a und 6b, die vorteilhaft zu einer minimalen Wärmeeinleitung aus schlecht-wärmeleitendem Material wie z.B. GFK bestehen können, starr an der Welle 3 befestigt. Der erste Lagerteil 5 enthält gemäß der genannten DE-C2-Schrift eine Magnetanordnung 7 mit ringscheibenförmigen Elementen 8i aus permanentmagnetischem Material. Diese Elemente sind in Achsrichtung gesehen alternierend magnetisch polarisiert und untereinander durch ringscheibenförmige Zwischenelemente 9i aus ferromagnetischem Material wie z.B. Eisen beabstandet. Das ferromagnetische Material dieser Zwischenelemente dient zur Konzentration des Magnetflusses an der zylinderförmigen Außenfläche des ersten Lagerteils 5 und erhöht dadurch die Tragkraft des Magnetlagers. Alle Elemente 8i und 9i sind stapelförmig hintereinander in einem Trägerkörper 10 angeordnet, der über die scheibenförmigen Tragelemente 6a und 6b den Kraftschluss mit der Welle 3 gewährleistet.

Der mitrotierende erste Lagerteil 5 mit den permanentmagnetischen Elementen 8i ist, durch einen Lagerspalt 12 getrennt, von einem zweiten, hohlzylinderförmigen, ortsfesten Lagerteil 13 umgeben, wobei die Spaltweite w in der Größenordnung von wenigen Millimetern liegen kann. Der einen Stator bildende ortsfeste Lagerteil 13 weist an seiner dem ersten Lagerteil 5 zugewandten Innenseite eine hohlzylinderförmige Supraletungsanordnung mit einem der bekannten Hoch-T_{c}-Supraleitermaterialien auf, das im Betriebsfalle auf einer Betriebstemperatur unterhalb seiner kritischen Temperatur zu halten ist. In diesem Supraleitermaterial werden durch die permanentmagnetischen Elemente 8i bei einer Lageänderung derselben als Folge von Feldänderungen, Abschirmströme induziert, die zu den gewünschten magnetischen Lagerungskräften zwischen den Lagerteilen 5 und 13 führen.

Die hohlzylindrische Supraleitungsanordnung 14 des ortsfesten zweiten Lagerteils 13 ist auf ihrer dem Lagerspalt 12 abgewandten Seite über einen Zwischenzylinder 15 aus thermisch gut leitendem Material wie z.B. Cu innerhalb eines Trägerkörpers 16 befestigt. Zu ihrer Kühlung ist die Supraleitungsanordnung über einen Wärmeleitungskörper 18 an einen Kaltkopf 20 eines nicht näher ausgeführten Kryokühlers thermisch angekoppelt. Entsprechende Kryokühler weisen einen geschlossenen Druckgaskreislauf insbesondere für He-Gas auf und sind beispielsweise vom Typ Gifford-McMahon oder Stirling oder sind als sogenannte Pulsröhrenkühler ausgebildet. Entsprechende Kryokühler sind allgemein bekannt. Sie können insbesondere als sogenannte regenerative Kühler (entsprechend der üblichen Klassifikation der Kryokühler) mit Regenerator bzw. regenerativem Arbeitszyklus ausgeführt sein (vgl. "Proceedings 16^{th} Int. Cryog. Engng. Conf. (ICEC 16)", Kitakyushu, JP, 20.-24.05.1996, Verlag Elsevier Science, 1997, Seiten 33 bis 44; "Adv. Cryog. Engng.", Vol. 35, 1990, Seiten 1191 bis 1205 oder US 5,335,505).

Der Kaltkopf 20 befindet sich auf der Außenseite eines auf Raumtemperatur liegenden, das Lager 2 vollständig umschließenden Lagergehäuses 21. An der Innenseite dieses Lagergehäuses ist der ortsfeste Lagerteil 13 über ringscheibenförmige Trägerelemente 22a und 22b befestigt. Diese Trägerelemente sind vorzugsweise im Hinblick auf eine minimale Wärmeeinleitung aus einem schlecht wärmeleitenden Material wie z.B. GFK. Aus Gründen einer thermischen Isolation ist wenigstens ein Teil des Innenraumes des Gehäuses 21 als mindestens ein thermischer Isolationsraum gestaltet, der zumindest großenteils die Einheit aus Supraleitungsanordnung 14 und Magnetanordnung 7 umgibt. Insbesondere kann, wie nachfolgend angenommen, dieser Raum evakuiert sein. Stattdessen oder vorteilhaft zusätzlich kann dieser Raum zumindest teilweise mit wenigstens einem thermischen Isolationsmittel ausgefüllt sein. Geeignete Isolationsmittel sind beispielsweise Isolierschaum, Superisolation, Isolierflocken oder Glasfasern. Gemäß der dargestellten Ausführungsform sollen zur thermischen Isolation zwei voneinander getrennte Vakuumräume V1 und V2 vorgesehen sein. Dabei setzt sich der Vakuumraum V1 aus zwei seitlichen Bereichen V1a und V1b und einem radial außen liegenden, sich zwischen dem ortsfesten zweiten Lagerteil 13 und dem radial außen liegenden Teil des Vakuumgehäuses 21 befindlichen Bereich V1c zusammen. Der Vakuumraum V2 befindet sich zwischen dem mitrotierenden ersten Lagerteil 5 und der Welle 3 und wird seitlich durch die Tragelemente 6a und 6b begrenzt. Er rotiert also mit diesen Teilen mit. Abweichend von der gewählten Darstellung können die Vakuumräume V1 und V2 noch mit wenigstens einem der an sich bekannten thermischen Isolationsmittel wie z.B. Superisolation oder Isolationsschaum zumindest teilweise ausgefüllt sein.

Eine Abdichtung des Vakuumraums V1 gegenüber der rotierenden Welle 3 ist vorteilhaft bei einer erfindungsgemäßen Ausgestaltung des Magnetlagers nicht erforderlich. Denn gemäß der Erfindung soll der zwischen dem mitrotierenden ersten Lagerteil 5 und dem ortsfesten zweiten Lagerteil 13 ausgebildete Lagerspalt 12 geringer Spaltweite w nicht mit dem Vakuumraum V1 verbunden sein. Vielmehr soll der Zwischenraum des Lagerspalts Teil eines (weiteren) Zusatzraumes 25 sein, der an der Welle abgedichtet ist. Hierzu mündet der Raum des Lagerspaltes 12 an dessen axial seitlichen Enden jeweils in sich radial bis zu der Welle 3 erstreckende Teilräume 25a und 25b. Diese Teilräume mit jeweils etwa ringscheibenförmigem Rauminhalt sind in axialer Richtung vorteilhaft sehr schmal gehalten. Sie gehen an der Welle in axial nach außen führende Dichtungsspalte 26a bzw. 26b über, die Teile von Dichtungsvorrichtungen 28a bzw. 28b sind. Der Zusatzraum 25 kann evakuiert oder mit einem trockenen Schutzgas wie z.B. N₂ gefüllt sein. Der Gasdruck liegt im Allgemeinen zwischen 0,1 und 10 bar, wobei ein leichter Überdruck gegenüber Normaldruck besonders vorteilhaft ist. Die Dichtungsvorrichtungen 28a und 28b sind in Figur 1 nicht näher ausgeführt. Einzelheiten von ihnen sind aus Figur 2 ersichtlich.

Wie aus dem Detailbild der Figur 2 bzgl. einer der Dichtungsvorrichtungen, z.B. bzgl. der Vorrichtung 28a, hervorgeht, mündet der zugehörende Dichtungsspalt 26a in den das Lagergehäuse 21 mit dem Magnetlager 2 umgebenden Außenraum R, der sich im Allgemeinen auf Raumtemperatur und Normaldruck befindet. Zur Abdichtung demgegenüber befindet sich in dem Dichtungsspalt 26a mindestens ein Dichtungselement 30 der Dichtungsvorrichtung 28a, das beispielsweise als Ferrofluiddichtungselement (vgl. DE 20 34 213 A) ausgebildet ist. Die Dichtungsvorrichtung 28a umfasst deshalb einen Permanentmagneten 33 mit Magnetpolen N und S sowie mit zwei seitlich daran angesetzten, den magnetischen Fluss führenden Jochschenkeln 34a und 34b. Die Jochschenkel sind an ihrer der Welle zugewandten Seite im Bereich des Dichtungsspaltes 26a mit Spitzen versehen, an denen jeweils ein Ferrofluidring 35i magnetisch gehalten ist. Hierzu muss die Welle 3 zumindest im Bereich des jeweiligen Dichtungselementes 30 ferromagnetisch sein. Beispielsweise ist deshalb ein in der Figur nicht dargestelltes Hohlrohr aus ferromagnetischem Material über die aus nichtmagnetischem Material gefertigte Welle geschoben.

Statt dieses angedeuteten Typs von Dichtungsvorrichtung können auch andere bekannte Ausführungsformen wie z.B. Labyrinthdichtungen oder Spaltdichtungen eingesetzt werden. Für die Dichtungsvorrichtung 28b mit ihrem Dichtungsspalt 26b ist eine entsprechende Abdichtung vorgesehen.

Wie ferner dem Detailbild der Figur 2 entnehmbar ist, ist der Vakuumraum V1 bzw. dessen Teilraum V1a im Bereich der Welle 3 durch eine ortsfeste Wand 31 des Dichtungsspalts 26a und durch den Jochschenkel 34a abgeschlossen. Der Jochschenkel stellt dabei einen verlängerten Teil der Seitenwand 21a des Lagergehäuses 21 dar. Stattdessen ist es aber auch vorteilhaft möglich, die Seitenwand 21a bis zu der Wand 31 verlaufen zu lassen und die Dichtungsvorrichtung 28a seitlich an die Seitenwand 21a anzusetzen, beispielweise mit einem O-Ring vakuumdicht anzuflanschen.

Vorteilhaft ergeben sich für alle diese erfindungsgemäßen Ausführungsformen des Magnetlagers keine Abdichtungsprobleme des isolierenden Vakuumraums V1 bzw. Isolationsraums an rotierenden Teilen. Bei dem Lager ist deshalb nur eine unproblematischere, weniger aufwendige Abdichtung des Lagerspalts 12 an der Welle 3 erforderlich.

## Patentansprüche

1. Magnetlager (2) mit magnetischer Lagerung einer drehbaren Welle innerhalb eines Stators (13) und mit folgenden Merkmalen:
- Ein erster Lagerteil (5) ist mit der Welle (3) starr verbunden und von einem zweiten, dem Stator zugehörenden Lagerteil (13) umschlossen unter Ausbildung eines Lagerspaltes (12) zwischen diesen Lagerteilen,
- der erste Lagerteil (5) enthält eine Magnetanordnung (7) mit permanentmagnetischen Elementen (8i),
- der zweite Lagerteil (13) enthält eine Supraleitungsanordnung (14) mit Hoch-T_{c}-Supraleitermaterial, wobei zwischen der Supraleitungsanordnung (14) und den permanentmagnetischen Elementen (8i) der Magnetanordnung (7) magnetische Lagerungskräfte hervorzurufen sind,
und
- eine Kühlvorrichtung (18,20) ist zur Kühlung des Supraleitermaterials der Supraleitungsanordnung auf eine Betriebstemperatur unterhalb der kritischen Temperatur des Supraleitermaterials vorgesehen,
**dadurch gekennzeichnet,**
- **dass** die Supraleitungsanordnung (14) und die Magnetanordnung (7) gemeinsam von mindestens einem Isolationsraum (V1) umschlossen sind,
und
- **dass** ein von dem mindestens einen Isolationsraum (V1) getrennter Zusatzraum (25) vorgesehen ist, der den Lagerspalt (12) und an seitlichen Stirnseiten der Supraleitungsanordnung (14) und der Magnetanordnung (7) sich radial bis zu der Welle (3) erstreckende und dort gegenüber der Welle abgedichtete Teilräume (25a, 25b; 26a, 26b) umfasst.

2. Magnetlager nach Anspruch 1, **dadurch gekennzeichnet, dass** der Zusatzraum (25) mit einem trockenen Schutzgas gefüllt ist.

3. Magnetlager nach Anspruch 2, **dadurch gekennzeichnet, dass** als Schutzgas He, Ne, Ar oder N₂ oder ein Gemisch mit mindestens einem dieser Gase ausgewählt ist.

4. Magnetlager nach Anspruch 2 oder 3, **dadurch gekennzeichnet, dass** das Schutzgas unter einem Druck zwischen 0,1 und 10 bar steht.

5. Magnetlager nach Anspruch 1, **dadurch gekennzeichnet, dass** der Zusatzraum (25) evakuiert ist.

6. Magneteinrichtung nach einem der vorangehenden Ansprüche, **dadurch gekennzeichnet, dass** der mindestens eine Isolationsraum (V1) evakuiert ist.

7. Magneteinrichtung nach einem der vorangehenden Ansprüche, **dadurch gekennzeichnet, dass** der mindestens eine Isolationsraum (V1) mit wenigstens einem Isolationsmittel zumindest teilweise ausgefüllt ist.

8. Magnetlager nach Anspruch 7, **dadurch gekennzeichnet, dass** das wenigstens eine Isolationsmittel aus der Gruppe Isolierschaum, Superisolation, Isolierflocken, Glasfasern ausgewählt ist.

9. Magneteinrichtung nach einem der vorangehenden Ansprüche, **dadurch gekennzeichnet, dass** die Supraleitungsanordnung (14) über schlecht wärmeleitende Tragelemente (22a, 22b) innerhalb eines auf Raumtemperatur befindlichen Lagergehäuses (21) befestigt ist.

10. Magnetlager nach einem der vorangehenden Ansprüche, **dadurch gekennzeichnet, dass** die Magnetanordnung (7) über schlecht wärmeleitende Tragelemente (6a, 6b) an der Welle (3) befestigt ist.

11. Magnetlager nach einem der vorangehenden Ansprüche, **dadurch gekennzeichnet, dass** der erste Lagerteil (5) und die Welle (3) einen geschlossenen, mitrotierenden Isolierraum (V2) begrenzen.

12. Magnetlager nach einem der vorangehenden Ansprüche, **dadurch gekennzeichnet, dass** die seitlichen Teilräume (25a, 25b) des Zusatzraums (25) jeweils in einem die Welle (3) umschließenden, axialen Dichtungsspalt (26a, 26b) münden, in dem jeweils mindestens eine Dichtungsvorrichtung (28a, 28b) angeordnet ist.

13. Magnetlager nach Anspruch 12, **dadurch gekennzeichnet, dass** die Dichtungsvorrichtungen (28a, 28b) jeweils zumindest eine Dichtung aus der Gruppe Ferrofluiddichtung, Labyrinthdichtung oder Spaltdichtung aufweisen.

14. Magnetlager nach einem der vorangehenden Ansprüche, **dadurch gekennzeichnet, dass** die Kühlvorrichtung mindestens einen Kryokühler mit wenigstens einem Kaltkopf (20) aufweist.

15. Magnetlager nach Anspruch 14, **dadurch gekennzeichnet, dass** der Kryokühler ein Gifford-McMahon-Kühler oder ein Stirling-Kühler oder Pulsröhrenkühler ist.

16. Magnetlager nach Anspruch 14 oder 15, **dadurch gekennzeichnet, dass** der Kaltkopf (20) über mindestens einen Wärmeleitkörper (18) thermisch an die Supraleitungsanordnung (14) angekoppelt ist.

## Claims

1. Magnetic bearing (2) where a shaft which can rotate is borne magnetically within a stator (13), having the following features:
- a first bearing part (5) is rigidly connected to the shaft (3) and is surrounded by a second bearing part (13), which is associated with the stator, forming a bearing gap (12) between these bearing parts,
- the first bearing part (5) contains a magnet arrangement (7) with permanently magnetic elements (8i),
- the second bearing part (13) contains a superconducting arrangement (14) with a high-T_{c} superconductor material, with magnetic bearing forces being produced between the superconducting arrangement (14) and the permanently magnetic elements (8i) of the magnet arrangement (7),
and
- a cooling apparatus (18,20) is provided for cooling the superconductor material of the superconducting arrangement to an operating temperature below the critical temperature of the superconductor material,
**characterized**
- **in that** the superconducting arrangement (14) and the magnet arrangement (7) are jointly surrounded by at least one isolation area (V1)
and
**in that** an additional area (25) is provided, which is separated from the at least one isolation area (V1) and comprises the bearing gap (12) and subareas (25a, 25b; 26a, 26b) which extend on side end faces of the superconducting arrangement (14) and of the magnet arrangement (7) radially as far as the shaft (3) and are sealed there with respect to the shaft.

2. Magnetic bearing according to Claim 1, **characterized in that** the additional area (25) is filled with a dry barrier gas.

3. Magnetic bearing according to Claim 2, **characterized in that** helium, neon, argon or nitrogen, or a mixture with at least one of these gases, is chosen as the barrier gas.

4. Magnetic bearing according to Claim 2 or 3, **characterized in that** the barrier gas is at a pressure of between 0.1 and 10 bar.

5. Magnetic bearing according to Claim 1, **characterized in that** the additional area (25) is evacuated.

6. Magnet device according to one of the preceding claims, **characterized in that** the at least one isolation area (V1) is evacuated.

7. Magnet device according to one of the preceding claims, **characterized in that** the at least one isolation area (V1) is at least partially filled with at least one isolation means.

8. Magnetic bearing according to Claim 7, **characterized in that** the at least one isolation means is selected from the group of insulating foam, superinsulation, insulating flakes or glass fibres.

9. Magnet device according to one of the preceding claims, **characterized in that** the superconducting arrangement (14) is mounted via poorly thermally conductive mounting elements (22a, 22b) within a bearing housing (21) which is at room temperature.

10. Magnetic bearing according to one of the preceding claims, **characterized in that** the magnet arrangement (7) is mounted on the shaft (3) via poorly thermally conductive mounting elements (6a, 6b).

11. Magnetic bearing according to one of the preceding claims, **characterized in that** the first bearing part (5) and the shaft (3) bound a closed isolation area (V2) which also rotates.

12. Magnetic bearing according to one of the preceding claims, **characterized in that** the side subareas (25a, 25b) of the additional area (25) each open in an axial sealing gap (26a, 26b) which surrounds the shaft (3) and in which in each case at least one sealing apparatus (28a, 28b) is arranged.

13. Magnetic bearing according to Claim 12, **characterized in that** the sealing apparatuses (28a, 28b) each have at least one seal from the group of ferrofluid seals, labyrinth seals or gap seals.

14. Magnetic bearing according to one of the preceding claims, **characterized in that** the cooling apparatus has at least one cryogenic cooler with at least one cold head (20).

15. Magnetic bearing according to Claim 14, **characterized in that** the cryogenic cooler is a Gifford-McMahon cooler or a Stirling cooler, or a pulsed-tube cooler.

16. Magnetic bearing according to Claim 14 or 15, **characterized in that** the cold head (20) is thermally coupled to the superconducting arrangement (14) via at least one thermally conductive body (18).

## Revendications

1. Palier (2) magnétique à support magnétique d'un arbre tournant dans un stator (13) ayant les caractéristiques suivantes :
- une première partie (5) du palier est reliée rigidement à l'arbre (3) et est entourée d'une deuxième partie (13) de palier appartenant au stator avec formation d'un intervalle (12) de palier entre ces parties de palier,
- la première partie (5) de palier comporte un agencement (7) d'aimant ayant des éléments (8i) à magnétisme permanent,
- la deuxième partie (13) de palier comporte un agencement (14) supraconducteur ayant un matériau supraconducteur à T_{c} élevée, des forces magnétiques de portée étant provoquées entre l'agencement (14) supraconducteur et les éléments (8i) à magnétisme permanent de l'agencement (7) d'aimant,
et
- un dispositif (18, 20) de refroidissement est prévu pour refroidir le matériau supraconducteur de l'agencement supraconducteur jusqu'à une température de fonctionnement inférieure à la température critique du matériau supraconducteur,
**caractérisé**
- **en ce que** l'agencement (14) supraconducteur et l'agencement (7) d'aimant sont entourés conjointement d'au moins une chambre (V1) isolante,
et
- **en ce qu'**il est prévu une chambre (25) supplémentaire qui est isolée de la chambre (V1) isolante et qui comprend l'intervalle (12) de palier et des sous-chambres (25a, 25b ; 26a, 26b) s'étendant sur des côtés frontaux latéraux de l'agencement (14) supraconducteur et de l'agencement (7) d'aimant radialement jusqu'à l'arbre (3) et y étant rendues étanches vis-à-vis de l'arbre.

2. Palier magnétique suivant la revendication 1, **caractérisé en ce que** la chambre (25) supplémentaire est emplie d'un gaz de protection (7).

3. Palier magnétique suivant la revendication 2, **caractérisé en ce qu'**il est choisi comme gaz de protection He, Ne, Ar ou N₂ ou un mélange avec au moins l'un de ces gaz.

4. Palier magnétique suivant la revendication 2 ou 3, **caractérisé en ce que** le gaz de protection est sous une pression comprise entre 0,1 et 10 bars.

5. Palier magnétique suivant la revendication 1, **caractérisé en ce que** la chambre (25) supplémentaire est mise sous vide.

6. Palier magnétique suivant l'une des revendications précédentes, **caractérisé en ce que** la au moins une chambre (V1) isolante est mise sous vide.

7. Palier magnétique suivant l'une des revendications précédentes, **caractérisé en ce que** la au moins une chambre (V1) isolante est emplie au moins en partie d'au moins un agent isolant.

8. Palier magnétique suivant la revendication 7, **caractérisé en ce que** le au moins un agent isolant est choisi dans le groupe de la mousse isolante, d'un superisolant, de flocons isolants et de fibres de verre.

9. Palier magnétique suivant l'une des revendications précédentes, **caractérisé en ce que** l'agencement (14) supraconducteur est fixé par des éléments (22a, 22b) porteurs mauvais conducteurs de la chaleur dans un boîtier (21) de palier se trouvant à la température ambiante.

10. Palier magnétique suivant l'une des revendications précédentes, **caractérisé en ce que** l'agencement (7) d'aimant est fixé à l'arbre (3) par des éléments (6a, 6b) porteurs mauvais conducteurs de la chaleur.

11. Palier magnétique suivant l'une des revendications précédentes, **caractérisé en ce que** la première partie (5) de palier et l'arbre (3) délimitent une chambre (V2) isolante fermée et entraînée en rotation.

12. Palier magnétique suivant l'une des revendications précédentes, **caractérisé en ce que** les sous-chambres (25a, 25b) latérales de la chambre (25) supplémentaire débouchent, respectivement, dans un intervalle (26a, 26b) axial d'étanchéité entourant l'arbre (3) et dans lequel est disposé, respectivement, au moins un dispositif (28a, 28b) d'étanchéité.

13. Palier magnétique suivant la revendication 12, **caractérisé en ce que** les dispositifs (28a, 28b) d'étanchéité ont, respectivement, au moins une étanchéité choisie dans le groupe d'une étanchéité ferrofluidique, d'une étanchéité à labyrinthe ou d'une étanchéité à fente.

14. Palier magnétique suivant l'une des revendications précédentes, **caractérisé en ce que** le dispositif de refroidissement comporte au moins un cryorefroidisseur ayant au moins une tête (20) froide.

15. Palier magnétique suivant la revendication 14, **caractérisé en ce que** le cryorefroidisseur est un refroidisseur Gifford-McMahon ou un refroidisseur Stirling ou un refroidisseur à tube pulsé.

16. Palier magnétique suivant la revendication 14 ou 15, **caractérisé en ce que** la tête (20) froide est couplée thermiquement à l'agencement (14) supraconducteur par au moins un corps (18) conducteur de la chaleur.
